(19)

Europäisches
Patentamt
European
Patent Office
Office européen
des brevets

(11)  **EP 3 199 994 A1**

(12)  **EUROPEAN PATENT APPLICATION**
published in accordance with Art. 153(4) EPC

(43)  Date of publication:
**02.08.2017  Bulletin 2017/31**

(21)  Application number: **15804665.6**

(22)  Date of filing: **06.07.2015**

(51)  Int Cl.:
*G02B 6/28* (2006.01)          *G02B 6/42* (2006.01)
*G02B 26/02* (2006.01)

(86)  International application number:
**PCT/JP2015/069408**

(87)  International publication number:
**WO 2016/047233 (31.03.2016 Gazette 2016/13)**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30)  Priority:  **24.09.2014   JP 2014193637**

(71)  Applicant: **Ishihara Sangyo Co., Ltd.
Ueda-shi, Nagano 386-0407 (JP)**

(72)  Inventors:
• **IIDA, Hidetoku
  Ueda-shi
  Nagano 386-0407 (JP)**
• **SHIRATORI, Hideaki
  Ueda-shi
  Nagano 386-0407 (JP)**

(74)  Representative: **Klunker IP
Patentanwälte PartG mbB
Destouchesstraße 68
80796 München (DE)**

(54)  **OPTICAL COUPLER AND METHOD FOR BRANCHING LIGHT USING OPTICAL COUPLER**

(57)      Provided is an optical coupler, which can allow the light to be branched off by the required amount when necessary, and a method of branching light using the optical coupler. Optical coupler 1 has optical fiber 10 that has small-diameter part 12, which is formed so as to have a relatively small outer diameter at a portion in the longitudinal direction, and that branches off the transmitted light by small-diameter part 12; and output optical fiber 20 that receives the light branched off from input optical fiber 10. Small-diameter part 12 of input optical fiber 10 is caused to contact with linear small-diameter part 22 of output optical fiber 20; a coupling length, which is the length along which small-diameter part 12 of input optical fiber 10 and small-diameter part 22 of output optical fiber 20 are made to contact with each other, or a propagation constant of the optical fibers is varied; and thus, branching ratio S of the light branched off from input optical fiber 10 into output optical fiber 20 is varied.

FIG. 1

(A)

(B)

EP 3 199 994 A1

**Description**

**Field of the Invention**

The present invention relates to an optical coupler and a method of branching light using such optical coupler, and in particular to an optical coupler configured by optical fibers with small-diameter parts and a method of branching light using such optical coupler.

**Background Art**

In optical communications using optical fibers, optical couplers are known as means for dividing light into a plurality of paths. An optical coupler may be configured by, for example, two optical fibers, wherein each of the two optical fibers has a small-diameter part, which is formed by extending a longitudinal portion of each optical fiber in the longitudinal direction such that the outer diameter thereof is small. The respective small-diameter parts of the two optical fibers are fused to each other. At the part where the two optical fibers are fused, the optical fibers are optically coupled to each other and such part is generally referred to as a coupling part.

The coupling ratio of the optical coupler having the above-described configuration is determined by the coupling length, which is the length of the coupling part. This coupling ratio determines the branching ratio at the optical coupler.

The optical coupler proposed in Patent Document 1 is a fusion-type optical coupler which is configured by fusing and extending two optical fibers. The optical coupler has a housing for accommodating the two fused and extended optical fibers. In this optical coupler, the branching ratio is measured prior to accommodation of the two fused and extended optical fibers inside the housing. Predetermined substances are filled around the fused and extended part.

The optical coupler proposed in Patent Document 2 is provided with a coupler body and a supporter. The coupler body is formed by fusing and extending two single-mode-type optical fibers. The supporter is for supporting the coupler body by placing the same thereon. The optical coupler is also provided with a cover. The cover is fixed firmly so as to cover the coupler body and is made of a material with a coefficient of thermal expansion different from that of the supporter. In addition, the optical coupler has heating/cooling means. The heating/cooling means heats or cools an integral body made up of the coupler body, the supporter and the cover. This optical coupler varies the coupling ratio by heating or cooling the coupler body.

**[Prior Art Documents]**

**[Patent Documents]**

[Patent Document 1] Japanese Laid-Open Patent Application No. Sho 63-316008
[Patent Document 2] Japanese Laid-Open Patent Application No. Sho 61-145509

**Summary of the Invention**

**Problems to be Solved by the Invention**

However, in the optical coupler proposed in Patent Document 1, the coupling length of the two optical fibers is constant. For this reason, light transmitted by one optical fiber is always branched off into the other optical fiber by means of the optical coupler. However, there may be cases in which one wants to branch off the light traveling in one of the optical fibers into the other of the optical fibers by means of the optical coupler only when necessary. The above-described optical coupler fails to meet such requirement. In addition, since the coupling length of this optical coupler is constant, the branching ratio by which the light traveling in one of the optical fibers is branched off into the other of the optical fibers is also constant. This optical coupler is incapable of being used with varying branching ratios.

The optical coupler proposed in Patent Document 2 is capable of varying the coupling ratio by heating or cooling the coupler body; however, since this optical coupler requires the provision of heating/cooling means, the optical coupler becomes large in size and the configuration thereof becomes complex.

The present invention has been made in order to solve the above problems. An object of the present invention is to provide an optical coupler having a compact and simple structure and a method of branching light using such optical coupler, in which light can be branched at a required branching ratio when necessary.

Means for Solving the Problems

(1) The optical coupler according to the present invention for solving the above problems is characterized in that it is provided with: an input optical fiber that has a small-diameter part, which is formed so as to have a relatively small outer diameter at a portion in the longitudinal direction, and that branches off transmitted light by means of the small-diameter part; and a light-receiving part that receives the light branched off from the input optical fiber, wherein the small-diameter part of the input optical fiber makes contact with the light-receiving part, and wherein a branching ratio of the light to be branched off from the input optical fiber into the light-receiving part varies due to the fact that a coupling length, which is a length along which the small-diameter part of the input optical fiber and the light-receiving part make contact with each other, or a propagation constant of the optical fiber, varies.

According to this invention, since the optical coupler is configured as discussed above, the coupling length, which is a length along which the input optical fiber and the light-receiving part make contact with each other, or the propagation constant of the optical fiber, can be freely varied. Accordingly, by making the coupling length of the input optical fiber and the light-receiving part shorter or longer than a predetermined length, it is possible to allow or not allow the light transmitted by the input optical fiber to branch off into the light-receiving part. In addition, it is possible to branch off the light transmitted by the input optical fiber at the branching ratio according to the coupling length or the branching ratio according to the difference in the propagation constant.

The optical coupler according to the present invention can be classified into the following four configurations.

In a first optical coupler according to the present invention, the light-receiving part is an output optical fiber that outputs the received light. The output optical fiber has a small-diameter part, which is formed so as to have a relatively small outer diameter at a portion in the longitudinal direction. One or both of the input optical fiber and the output optical fiber has/have a curved part(s) where the small-diameter part(s) is/are curved. The curved part of one of the input optical fiber and the output optical fiber is made to contact with the small-diameter part of the other one of the input optical fiber and the output optical fiber, or the curved parts of both the input optical fiber and the output optical fiber are made to contact with each other. The coupling length increases by the input optical fiber and the output optical fiber being caused to approach one another. The coupling length decreases by the input optical fiber and the output optical fiber being caused to draw away from one another.

According to this invention, the branching ratio can be freely varied by varying the coupling length through adjustment of the force of pressing the input optical fiber and the output optical fiber against each other. In addition, since the elastic force of the curved parts can be utilized when causing the input optical fiber and the output optical fiber approach or draw away from one another, the structure of the optical coupler can be simplified.

In a second optical coupler according to the present invention, the light-receiving part is an output optical fiber that outputs the received light. The output optical fiber has a small-diameter part, which is formed so as to have a relatively small outer diameter at a portion in the longitudinal direction. One or both of the input optical fiber and the output optical fiber has/have a curved part(s) where the small-diameter part(s) is/are curved. The curved part of one of the input optical fiber and the output optical fiber is made to contact with the small-diameter part of the other one of the input optical fiber and the output optical fiber, or the curved parts of both the input optical fiber and the output optical fiber are made to contact with each other. By centering around the part where the input optical fiber and the output optical fiber make contact with each other, one of the input optical fiber and the output optical fiber rotates in a direction twisted with respect to the other one of the input optical fiber and the output optical fiber in order to vary a virtual plane formed by the input optical fiber and a virtual plane formed by the output optical fiber within a predetermined angle range, and thus, the coupling length is varied.

According to this invention, the branching ratio can be freely varied by varying the coupling length through adjustment of the angle formed by the input optical fiber and the output optical fiber.

In a third optical coupler according to the present invention, the light-receiving part is an output optical fiber that outputs the received light. The output optical fiber has a small-diameter part, which is formed so as to have a relatively small outer diameter at a portion in the longitudinal direction. One of the input optical fiber and the output optical fiber has a curved part where the small-diameter part thereof is curved. The propagation constant of the optical fiber varies by the input optical fiber sliding over the small-diameter part of the output optical fiber in the direction in which the small-diameter part of the output optical fiber extends, or by the output optical fiber sliding over the small-diameter part of the input optical fiber in the direction in which the small-diameter part of the input optical fiber extends.

According to this invention, the branching ratio can be freely varied by varying the propagation constant through adjustment of the relative position of the input optical fiber with respect to the output optical fiber.

In a fourth optical coupler according to the present invention, the light-receiving part is a photodiode. The input optical fiber has a curved part where the small-diameter part thereof is curved. The curved part of the input optical fiber is made to contact with an apical surface of the photodiode. The coupling length increases by the input optical fiber and the photodiode approaching one another. The coupling length decreases by the input optical fiber and the photodiode being drawn away from one another.

According to this invention, the branching ratio can be freely varied by varying the coupling length through adjustment of the force of pressing the input optical fiber and the photodiode against each other. In addition, since the elastic force of the curved part can be utilized when causing the input optical fiber and the photodiode approach or draw away from one another, the structure of the optical coupler can be simplified.

(2) The method of branching light using the optical coupler according to the present invention for solving the above problems is characterized in that it makes use of an optical coupler provided with: an input optical fiber that has a small-diameter part, which is formed so as to have a relatively small outer diameter at a portion in the longitudinal direction, and that branches off transmitted light by means of the small-diameter part; and a light-receiving part that receives the light branched off from the input optical fiber, wherein the small-diameter part of the input optical fiber is made to contact with the light-receiving part, and wherein a branching ratio of the light branched off from the input optical fiber into the light-receiving part is made to vary by varying a coupling length, which is a length along which the small-diameter part of the input optical fiber and the light-receiving part make contact with each other, or a propagation constant of the optical fiber.

According to this invention, since light is branched off using the above-described optical coupler, the coupling length, which is a length along which the input optical fiber and the light-receiving part make contact with each other, can be freely varied. Accordingly, by making the coupling length of the input optical fiber and the light-receiving part shorter or longer than a predetermined length, it is possible to allow or not allow the light transmitted by the input optical fiber to branch off into the light-receiving part. In addition, it is possible to branch off the light transmitted by the input optical fiber at the branching ratio according to the coupling length or the branching ratio according to the difference in the propagation constant.

The method of branching light using the optical coupler according to the present invention can be classified into the following four types.

In the method of branching light using the first optical coupler according to the present invention, the light-receiving part is an output optical fiber that outputs the received light. The output optical fiber has a small-diameter part, which is formed so as to have a relatively small outer diameter at a portion in the longitudinal direction. One or both of the input optical fiber and the output optical fiber has/have a curved part(s) where the small-diameter part(s) is/are curved. The curved part of one of the input optical fiber and the output optical fiber is made to contact with the small-diameter part of the other one of the input optical fiber and the output optical fiber, or the curved parts of both the input optical fiber and the output optical fiber are made to contact with each other. The coupling length increases by causing the input optical fiber and the output optical fiber to approach one another. The coupling length decreases by causing the input optical fiber and the output optical fiber to draw away from each other.

According to this invention, the branching ratio can be freely varied since the coupling length is varied through adjustment of the force of pressing the input optical fiber and the output optical fiber against each other. In addition, since the elastic force of the curved parts can be utilized when making the input optical fiber and the output optical fiber approach or draw away from one another, the structure of the optical coupler can be simplified.

In the method of branching light using the second optical coupler according to the present invention, the light-receiving part is an output optical fiber that outputs the received light. The output optical fiber has a small-diameter part, which is formed so as to have a relatively small outer diameter at a portion in the longitudinal direction. One or both of the input optical fiber and the output optical fiber has/have a curved part(s) where the small-diameter part(s) is/are curved. The curved part of one of the input optical fiber and the output optical fiber is made to contact with the small-diameter part of the other one of the input optical fiber and the output optical fiber, or the curved parts of both the input optical fiber and the output optical fiber are made to contact with each other. By centering around the part where the input optical fiber and the output optical fiber make contact with each other, one of the input optical fiber and the output optical fiber is rotated in a direction twisted with respect to the other one of the input optical fiber and the output optical fiber in order to cause a virtual plane formed by the input optical fiber and a virtual plane formed by the output optical fiber to vary within a predetermined angle range, and thus, the coupling length is varied.

According to this invention, the branching ratio can be freely varied since the coupling length is varied through adjustment of the angle formed by the input optical fiber and the output optical fiber.

In the method of branching light using the third optical coupler according to the present invention, the light-receiving part is an output optical fiber that outputs the received light. The output optical fiber has a small-diameter part, which is formed so as to have a relatively small outer diameter at a portion in the longitudinal direction. One of the input optical fiber and the output optical fiber has a curved part where the small-diameter part thereof is curved. The propagation constant of the optical fiber is caused to vary by the input optical fiber sliding over the small-diameter part of the output optical fiber in the direction in which the small-diameter part of the output optical fiber extends, or by the output optical fiber sliding over the small-diameter part of the input optical fiber in the direction in which the small-diameter part of the input optical fiber extends.

According to this invention, the branching ratio can be freely varied since the propagation constant is varied through adjustment of the relative position of the input optical fiber with respect to the output optical fiber.

In the method of branching light using the fourth optical coupler according to the present invention, the light-receiving part is a photodiode. The input optical fiber has a curved part where the small-diameter part thereof is curved. The curved part of the input optical fiber is made to contact with an apical surface of the photodiode. The coupling length increases by causing the input optical fiber and the photodiode to approach one another. The coupling length decreases by drawing away the input optical fiber and the photodiode from each other.

According to this invention, the branching ratio can be freely varied since the coupling length is varied through adjustment of the force of pressing the input optical fiber and the photodiode against each other. In addition, since the elastic force of the curved part can be utilized when making the input optical fiber and the photodiode approach or draw away from one another, the structure of the optical coupler can be simplified.

Effect of the Invention

According to the optical coupler of the present invention and the method of branching light using such optical coupler, it is possible to provide an optical coupler having a compact and simple structure and a method of branching light using such optical coupler, in which light can be branched at a required branching ratio when necessary.

Brief Descriptions of the Drawings

Fig. 1 is a diagram illustrating the principles of an optical coupler of a first embodiment according to the present invention.
Fig. 2 is a diagram illustrating the principles of an optical coupler of a first embodiment which is of a different type from that of the optical coupler of Fig. 1.
Fig. 3 is a perspective diagram showing one example of an optical coupler provided with a casing into which optical fibers are accommodated.
Fig. 4 is a diagram illustrating the principles of an optical coupler of a second embodiment according to the present invention.
Fig. 5 is a diagram illustrating the principles of an optical coupler of a second embodiment which is of a different type from that of the optical coupler of Fig. 4.
Fig. 6 is a diagram illustrating the principles of an optical coupler of a third embodiment according to the present invention.
Fig. 7 is a diagram illustrating the principles of an optical coupler of a fourth embodiment according to the present invention.
Fig. 8 is a graph showing one example of the relationship between the length of the fused/extended part and the branching ratio.
Fig. 9 is a diagram schematically illustrating an optical coupler used in an experiment.
Fig. 10 is a diagram schematically illustrating an optical coupler used in an experiment, which is of a different type from that of the optical coupler shown in Fig. 9.
Fig. 11 is a graph showing the experiment results of the relationship between the coupling length and the coupling rate.

Embodiments of the Invention

Hereinafter, embodiments of the present invention will be described in detail with reference to the drawings. The technical scope of the present invention is, however, not limited to the following embodiments and the present invention may be implemented in various variations within the scope of the gist thereof.

[Basic configuration]

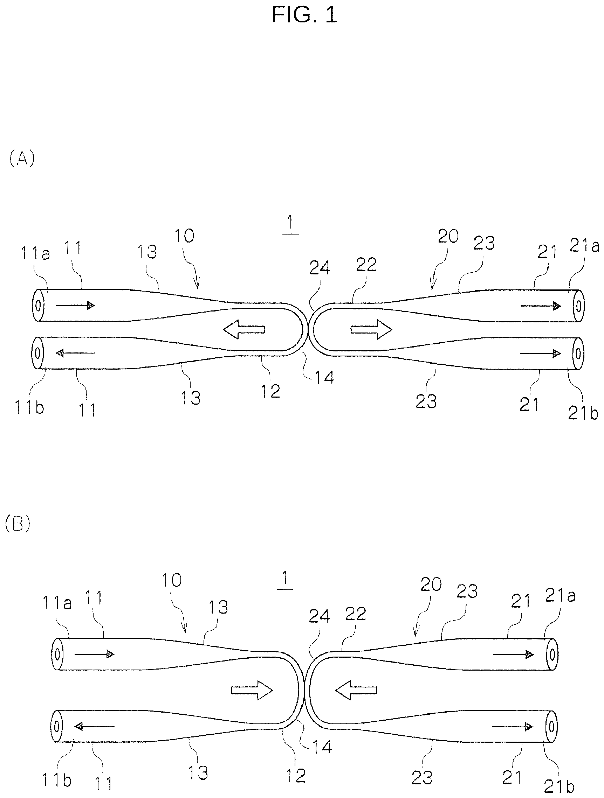

As shown in Figs. 1 to 7, the basic configuration of optical coupler 1, 1A, 1B, 2, 2A, 3, 4 according to the present invention is an optical coupler provided with: input optical fiber 10 that has small-diameter part 12, which is formed so as to have a relatively small outer diameter at a portion in the longitudinal direction, and that branches off transmitted light by means of small-diameter part 12; and light-receiving part 20, 40, 50 that receives the light branched off from input optical fiber 10, wherein small-diameter part 12 of input optical fiber 10 makes contact with light-receiving part 20, 40, 50, and wherein branching ratio S of the light to be branched off from the input optical fiber into the light-receiving part varies due to the fact that the coupling length, which is the length along which small-diameter part 12 of input optical fiber 10 makes contact with light-receiving part 20, 40, 50, or the propagation constant of the optical fiber, varies. Such optical coupler has a configuration in any of the following configurations (1) to (4).

(1) An optical coupler of the first configuration corresponds to optical coupler 1, 1A, 1B, in which: the above-described light-receiving part 20, 40, 50 corresponds to output optical fiber 20 that has small-diameter part 22, which is formed so as to have a relatively small outer diameter at a portion in the longitudinal direction, and that receives light branched off from input optical fiber 10; one or both of input optical fiber 10 and output optical fiber 20 has/have curved part(s) 14, 24 where small-diameter part(s) 12, 22 is/are curved; curved part 14, 24 in small-diameter part 12, 22 of one of input optical fiber 10 and output optical fiber 20 is made to contact with linear small-diameter part 12, 22 of the other one of input optical fiber 10 and output optical fiber 20, or curved parts 14, 24 in small-diameter parts 12, 22 of both input optical fiber 10 and output optical fiber 20 are made to contact with each other; and through the utilization of the elastic force in curved part(s) 14, 24 of at least one of input optical fiber 10 and output optical fiber 20, the pressing force of input optical fiber 10 and output optical fiber 20 is varied by making input optical fiber 10 and output optical fiber 20 approach one another such that the coupling length, which is the length along which small-diameter part 12 of input optical fiber 10 and small-diameter part 22 of output optical fiber 20 are made to contact with each other, is increased, and on the other hand, the pressing force of input optical fiber 10 and output optical fiber 20 is varied by making input optical fiber 10 and output optical fiber 20 draw away from each other such that the coupling length is decreased; and thus, branching ratio S of the light branched off from input optical fiber 10 into output optical fiber 20 is varied.

(2) An optical coupler of the second configuration corresponds to optical coupler 2, 2A, in which: the above-described light-receiving part 20, 40, 50 corresponds to output optical fiber 20 that has small-diameter part 22, which is formed so as to have a relatively small outer diameter at a portion in the longitudinal direction, and that receives light branched off from input optical fiber 10; one or both of input optical fiber 10 and output optical fiber 20 has/have curved part(s) 14, 24 where small-diameter part(s) 12, 22 is/are curved; curved part 14, 24 in small-diameter part 12, 22 of one of input optical fiber 10 and output optical fiber 20 is made to contact with linear small-diameter part 12, 22 of the other one of input optical fiber 10 and output optical fiber 20, or curved parts 14, 24 in small-diameter parts 12, 22 of both input optical fiber 10 and output optical fiber 20 are made to contact with each other; the outer diameter of small-diameter parts 12, 22 of input optical fiber 10 and output optical fiber 20 is formed so as to be from 5 $\mu$m to 10 $\mu$m, inclusive; and, by centering around the part where input optical fiber 10 and output optical fiber 20 make contact with each other, one of input optical fiber 10 and output optical fiber 20 rotates in a direction twisted with respect to the other one of input optical fiber 10 and output optical fiber 20 in order to vary virtual plane P1, P11 formed by input optical fiber 10 and virtual plane P2, P22 formed by output optical fiber 20 within a range of from 0 degrees to 5 degrees, inclusive, so as to vary the coupling length; and thus, branching ratio S of the light branched off from input optical fiber 10 into output optical fiber 20 is varied.

(3) An optical coupler of the third configuration corresponds to optical coupler 3, in which: the above-described light-receiving part 20, 40, 50 corresponds to output optical fiber 40 that has small-diameter part 42, which is formed so as to have a relatively small outer diameter at a portion in the longitudinal direction, and that receives light branched off from input optical fiber 10; one of input optical fiber 10 and output optical fiber 40 has curved part 14 where small-diameter part 12, 42 thereof is curved; and by input optical fiber 10 sliding between connecting parts 43 that connect body part 41 of output optical fiber 40 and small-diameter part 42 thereof to each other, or by output optical fiber 40 sliding between connecting parts 13 that connect body part 11 of input optical fiber 10 and small-diameter part 12 thereof to each other, the relative position of input optical fiber 10 and output optical fiber 40 is adjusted, the difference in propagation constant $\beta$ between input optical fiber 10 and output optical fiber 40 is varied, and thus, branching ratio S of the light branched off from input optical fiber 10 into output optical fiber 40 is varied.

(4) An optical coupler of the fourth configuration corresponds to optical coupler 4, in which: the above-described light-receiving part 20, 40, 50 corresponds to photodiode 50 that receives light branched off from input optical fiber 10; input optical fiber 10 has curved part 14 where small-diameter part 12 thereof is curved; curved part 14 of input optical fiber 10 is made to contact with an apical surface of photodiode 50; and through the utilization of the elastic force in curved part 14 of input optical fiber 10, the force by which input optical fiber 10 is pressed against photodiode 50 is varied by input optical fiber 10 and photodiode 50 approaching one another such that the coupling length is increased, and on the other hand, the force by which input optical fiber 10 is pressed against photodiode 50 is varied by input optical fiber 10 and photodiode 50 being made to draw away from each another such that the coupling length is decreased, and thus, branching ratio S of the light branched off from input optical fiber 10 into photodiode 50 is varied.

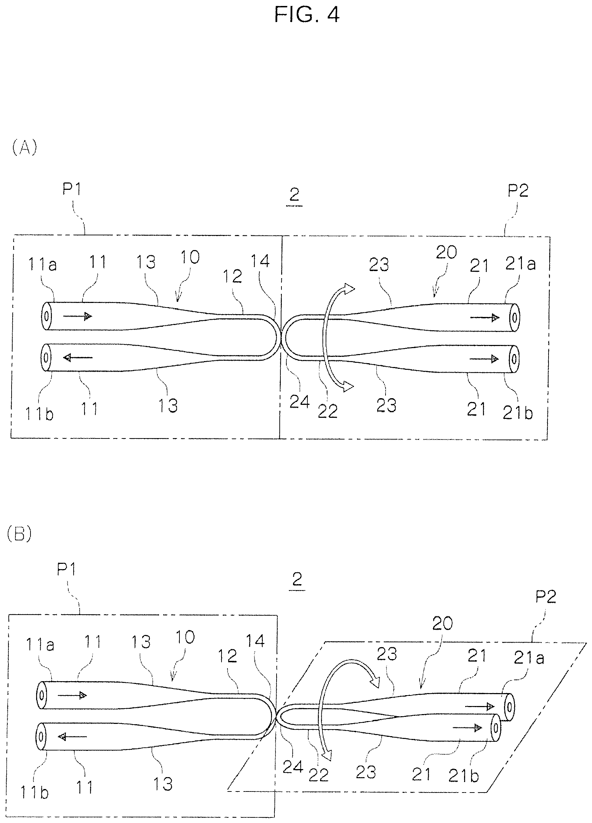

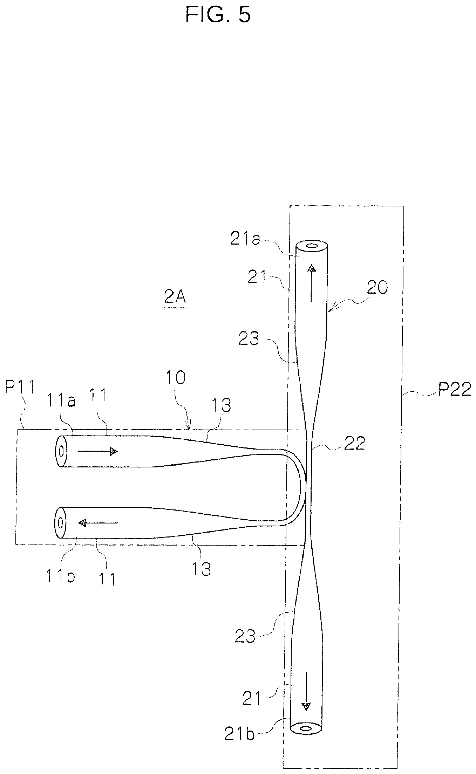

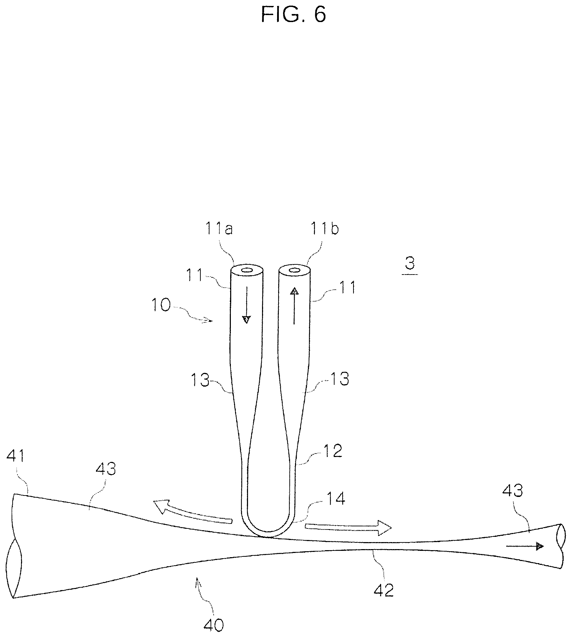

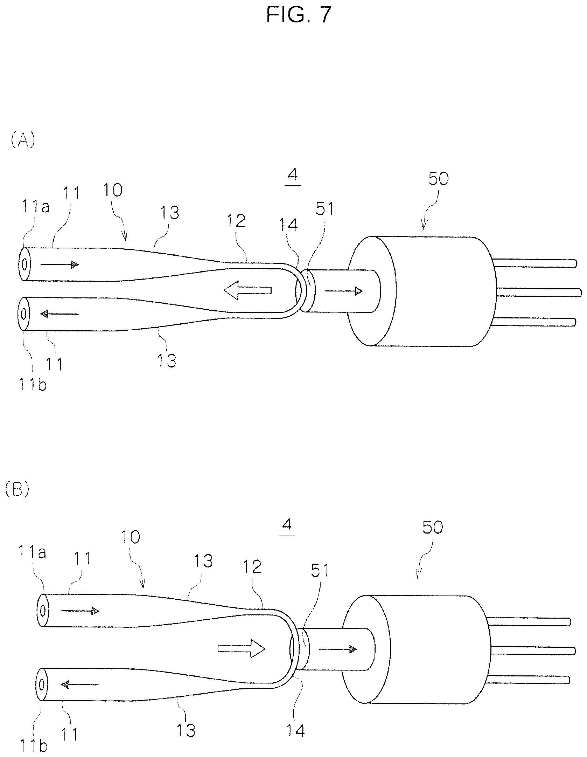

In respective optical couplers 1, 1A, 1B, 2, 2A, 4 of the first embodiment shown in Figs. 1 to 3, of the second embodiment shown in Figs. 4 and 5, and of the fourth embodiment shown in Fig. 7, branching ratio S of the light branching off from input optical fiber 10 into light-receiving part 20, 50 varies due to the variation of the coupling length. On the other hand, in optical coupler 3 of the third embodiment shown in Fig. 6, branching ratio S of the light branched off from input optical fiber 10 into light-receiving part 40 varies due to the variation of the propagation constant of the optical fibers.

In general, in an optical fiber, the refractive index of a cladding is smaller than that of a core. For this reason, when input optical fiber 10 extends linearly, the light travelling through the core of input optical fiber 10 is subject to total reflection inside the core and thus, it does not leak into the cladding. However, when input optical fiber 10 has a curved part, in particular, when the curvature radius of the curved part is small, the light travelling through the core enters into a boundary surface between the core and the cladding at an incident angle smaller than the critical angle. Accordingly, at the curved part, the light travelling through the core fails to be subjected to total reflection inside the core, and thus, part thereof leaks into the cladding.

Optical coupler 1, 1A, 1B, 2, 2A, 3, 4 makes use of this principle in order to branch off the light transmitted by input optical fiber into light-receiving part 20, 40, 50 at the position of curved part 14.

A typical fiber fusion-type optical coupler is configured by extending and fusing together an optical fiber for input and an optical fiber for output. It should be noted that the part where the input optical fiber and the output optical fiber are extended and fused together is referred to as "the fused/extended part." This fiber fusion-type optical coupler branches off the light transmitted by the input optical fiber into the output optical fiber by means of the fused/extended part. Regarding branching ratio S of this fiber fusion-type optical coupler, the length of the fused/extended part of the optical fibers varies depending on the cross-sectional shape of the optical fibers at the fused/extended part, the refractive indexes of the cladding part and the surrounding thereof of the fused/extended part, and the wavelength of the light entering into the optical fiber. Branching ratio S can be expressed as formula 1 below. As shown in formula 1, branching ratio S can be expressed as a trigonometric function of length L of the fused/extended part. Accordingly, branching ratio S of optical coupler 1, 1A, 1B, 2, 2A, 4 varies due to the variation in the coupling length.

$$S = \sin^2(CL) \qquad (\text{formula 1})$$

It should be noted that, in formula 1, L denotes a length of the fused/extended part. C in formula 1 denotes a value which is expressed by formula 2. In formula 2, $\lambda$ denotes a wavelength of signal light, $n_2$ denotes a refractive index of the cladding of the optical fiber and a denotes a minor axis at the cross-sectional surface of the fused/extended part.

$$C = 3\pi\lambda/32n_2a^2(1+a/V)^2 \qquad (\text{formula 2})$$

V in formula 2 denotes a value expressed by formula 3. It should be noted that, in formula 3, $n_3$ denotes a refractive index of a surrounding media. In addition, k denotes a wave number in a vacuum expressed by formula 4.

$$V = ak(n^2_2 - n^2_3)^{1/2} \qquad (\text{formula 3})$$

$$k = 2\pi/\lambda \qquad (\text{formula 4})$$

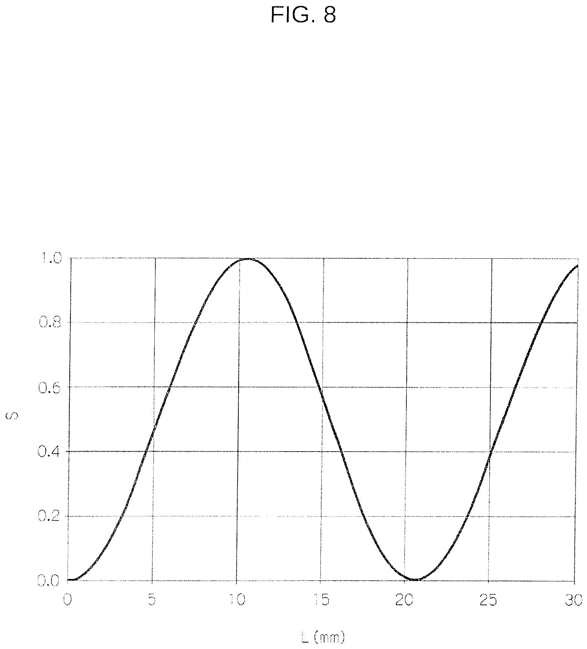

The graph shown in Fig. 8 shows an example of the relationship between branching ratio S and the length of the fused/extended part, in which the optical fibers are extended and the outer peripheries thereof are fused to each other. The horizontal axis of the graph shown in Fig. 8 represents length L of the fused/extended part, in which the optical fibers are extended and the outer peripheries thereof are fused to each other, and the vertical axis thereof represents branching ratio S. As discussed above, since branching ratio S can be expressed as a trigonometric function of length L of the fused/extended part, branching ratio S varies, in a cyclic manner, in association with the variation of length L of the fused/extended part.

According to this optical coupler 1, 1A, 1B, 2, 2A, 3, 4, a unique effect can be achieved to the effect that an optical coupler having a compact and simple structure and a method of branching light using such optical coupler can be provided, wherein the light can be branched off at a required branching ratio S when necessary.

Hereinafter, the optical coupler according to the present invention and the method of branching light using such optical coupler will be described in accordance with the respective embodiments.

[First embodiment]

Optical coupler 1, 1A, 1B of the first embodiment is configured such that it is provided with: input optical fiber 10 that has small-diameter part 12, which is formed so as to have a relatively small outer diameter at a portion in the longitudinal direction, and that branches off the transmitted light by means of small-diameter part 12; and output optical fiber 20 that has small-diameter part 22, which is formed so as to have a relatively small outer diameter at a portion in the longitudinal direction, and that receives the light branched off from input optical fiber 10, wherein one or both of input optical fiber 10 and output optical fiber 20 has/have curved part(s) 14, 24 where small-diameter part(s) 12, 22 is/are curved, wherein curved part 14, 24 in small-diameter part 12, 22 of one of input optical fiber 10 and output optical fiber 20 is caused to contact with linear small-diameter part 12, 22 of the other one of input optical fiber 10 and output optical fiber 20, or curved parts 14, 24 in small-diameter parts 12, 22 of both input optical fiber 10 and output optical fiber 20 are caused to contact with each other, and wherein, through utilization of elastic force in curved part(s) 14, 24 of at least one of input optical fiber 10 and output optical fiber 20, the pressing force of input optical fiber 10 and output optical fiber 20 is varied by making input optical fiber 10 and output optical fiber 20 approach one another such that the coupling length, which is the length along which small-diameter part 12 of input optical fiber 10 and small-diameter part 22 of output optical fiber 20 are made to contact with each other, is increased, and on the other hand, the pressing force of input optical fiber 10 and output optical fiber 20 is varied by making input optical fiber 10 and output optical fiber 20 draw away from each other such that the coupling length is decreased, and thus, branching ratio S of the light branched off from input optical fiber 10 into output optical fiber 20 is varied.

The method of branching light performed by such optical coupler 1, 1A, 1B is a method that makes use of optical coupler 1, 1A, 1B that is provided with: input optical fiber 10 that has small-diameter part 12, which is formed so as to have a relatively small outer diameter at a portion in the longitudinal direction, and that branches off the transmitted light by means of small-diameter part 12; and output optical fiber 20 that has small-diameter part 22, which is formed so as to have a relatively small outer diameter at a portion in the longitudinal direction, and that receives the light branched off from input optical fiber 10. One or both of input optical fiber 10 and output optical fiber 20 has/have curved part(s) 14, 24 where small-diameter part(s) 12, 22 is/are curved. Curved part 14, 24 in small-diameter part 12, 22 of one of input optical fiber 10 and output optical fiber 20 is made to contact with linear small-diameter part 12, 22 of the other one of input optical fiber 10 and output optical fiber 20, or curved parts 14, 24 in small-diameter parts 12, 22 of both input optical fiber 10 and output optical fiber 20 are made to contact with each other. Through utilization of elastic force in curved part(s) 14, 24 of at least one of input optical fiber 10 and output optical fiber 20, the pressing force of input optical fiber 10 and output optical fiber 20 is varied by making input optical fiber 10 and output optical fiber 20 approach one another such that the coupling length, which is the length along which small-diameter part 12 of input optical fiber 10 and small-diameter part 22 of output optical fiber 20 are made to contact with each other, is increased. On the other hand, the pressing force of input optical fiber 10 and output optical fiber 20 is varied by making input optical fiber 10 and output optical fiber 20 draw away from each other such that the coupling length is shortened. Thus, branching ratio S of the light branched off from input optical fiber 10 into output optical fiber 20 is varied.

As shown in Fig. 1, optical coupler 1 of the first embodiment has input optical fiber 10 and output optical fiber 20. Input optical fiber 10 is an optical fiber in which light to be branched off is transmitted through and provided with body parts 11, small-diameter part 12 and connecting parts 13. Body parts 11 correspond to input optical fiber 10 itself and the outer diameter thereof is the same as that of input optical fiber 10. Small-diameter part 12 is a part where the outer diameter of input optical fiber 10 is formed relatively small at a portion of input optical fiber 10 in the longitudinal direction. Body part 11 and small-diameter part 12 are connected to each other through connecting part 13. Connecting parts 13 are parts, on both sides of small-diameter part 12 in the longitudinal direction, where the outer diameter thereof gradually decreases from body part 11 toward small-diameter part 12. In addition, input optical fiber 10 has curved part 14 where small-diameter part 12 is curved. In input optical fiber 10, the direction in which the input optical fiber extends is inverted by means of curved part 14.

The outer diameter of the input optical fiber 10 is 125 $\mu$m or less, and the diameter of the core is 10 $\mu$m or less. The outer diameter of small-diameter part 12 is from 1 $\mu$m to 20 $\mu$m, inclusive. The rate of variation of the outer diameter at connecting part 13 is from 0.05 % to 2.5 %, inclusive. It should be noted that this "rate of variation of the outer diameter" as used herein refers to a rate at which the outer diameter varies when moved by 1 mm in the longitudinal direction of input optical fiber 10. However, the rate of the variation amount with respect to the nearest outer diameter is from 10 % to 20 %, inclusive. In addition, the difference between the core refractive index ($n_1$) and the cladding refractive index ($n_2$), which is expressed by formula 5, is approximately 0.3 %.

$$\Delta = n^2{}_1 \text{-} 1^2{}_2 / 2n^2{}_1 \qquad\qquad (\text{formula } 5)$$

Output optical fiber 20 is an optical fiber into which the branched off light is transmitted. Similarly to input optical fiber 10, output optical fiber 20 has body parts 21, small-diameter part 22 and connecting parts 23. It should be noted that the configuration of body part 21, small-diameter part 22 and connecting part 23 of output optical fiber 20 is the same as that of body part 11, small-diameter part 12 and connecting part 13 of input optical fiber 10. In addition, output optical fiber 20 has curved part 24 where small-diameter part 22 is curved. In output optical fiber 20, the direction in which the output optical fiber extends is inverted by means of curved part 24.

The outer diameter of output optical fiber 20 is 125 $\mu$m or less, and the diameter of the core is 10 $\mu$m or less. The outer diameter of small-diameter part 22 is from 1 $\mu$m to 20 $\mu$m, inclusive. The rate of variation of the outer diameter of connecting part 23 is from 0.05 % to 2.5 % inclusive. It should be noted that this "rate of variation of the outer diameter" as used herein refers to a rate at which the outer diameter varies when moved by 1 mm in the longitudinal direction of input optical fiber 10. In addition, the difference between the core refractive index ($n_1$) and the cladding refractive index ($n_2$), which is expressed by formula 5, is approximately 0.3 %.

The above-described input optical fiber 10 and output optical fiber 20 are arranged at positions in the same or substantially the same plane, and curved parts 14, 24 of the respective fibers are in contact with each other. The part where curved parts 14, 24 are in contact with each other corresponds to the coupling part, in which part of the light traveling through input optical fiber 10 is branched off into output optical fiber 20. This coupling part has a certain length. In the present specification, this coupling part length will be referred to as "the coupling length."

As shown in Fig. 1(A), the coupling length of optical coupler 1 decreases due to the fact that input optical fiber 10 and output optical fiber 20 draw away from each other. On the other hand, as shown in Fig. 1(B), the coupling length increases due to the fact that input optical fiber 10 and output optical fiber 20 approach one another. The coupling length of optical coupler 1 is varied by making input optical fiber 10 and output optical fiber 20 approach or draw away from one another. Through this variation of the coupling length, optical coupler 1 allows the light travelling through input optical fiber 10 to be branched off into output optical fiber 20 only by the required amount when necessary.

In optical coupler 1, the coupling length may be varied by adjusting the force of pressing input optical fiber 10 and output optical fiber 20 against each other. As a result, optical coupler 1 can freely vary branching ratio S. In addition, since optical coupler 1 can make use of the elastic force of curved parts 14, 24 when making input optical fiber 10 and output optical fiber 20 approach or draw away from one another, the structure thereof can be simplified.

The coupling length of optical coupler 1 varies within the range of from 0 mm to 12 mm, inclusive. At this time, branching ratio S varies within the range of from 0 % to 100 %, inclusive. For example, in Fig. 1, when the coupling length is 2 mm, 80 % of the light transmitted from body part 11a of input optical fiber 10 travels to body part 11b of input optical fiber 10 and does not branch off into body part 21a of output optical fiber 20, and 20 % of the light branches off into body part 21b of output optical fiber 20.

When the coupling length is 6 mm, 100 % of the light transmitted from body part 11a of input optical fiber 10 is branched off into body part 21b of output optical fiber 20. When the coupling length is approximately 12 mm, the light transmitted from body part 11a of input optical fiber 10 does not branch off into output optical fiber 20 and all of such light travels to body part 11b of input optical fiber 10.

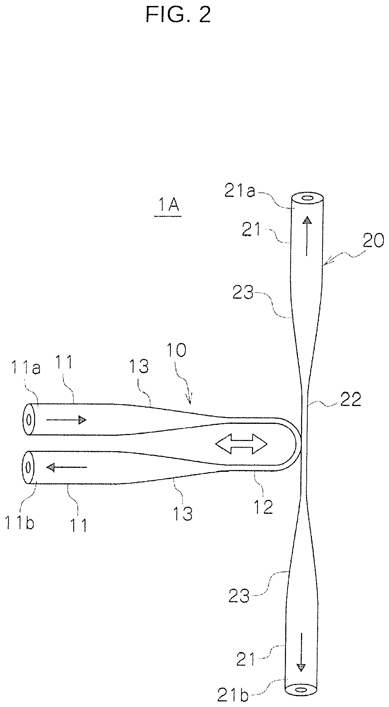

The optical coupler of the first embodiment may be configured such that one of input optical fiber 10 and output optical fiber 20 employs an optical fiber provided with a curved part and the other employs an optical fiber which is linearly extended. Fig. 2 shows an example thereof.

Input optical fiber 10 of optical coupler 1A shown in Fig. 2 is provided with body parts 11, small-diameter part 12 and connecting parts 13. In addition, input optical fiber 10 also has curved part 14 where small-diameter part 12 is curved. Curved part 14 inverts the direction in which the input optical fiber extends. Output optical fiber 20 is also provided with body parts 21, small-diameter part 22 and connecting parts 23. However, small-diameter part 22 extends linearly. Optical coupler 1A is configured such that input optical fiber 10 and output optical fiber 20 are arranged at positions in the same or substantially the same plane and that curved part 14 of input optical fiber 10 makes contact with small-diameter part 22 of output optical fiber 20.

As shown in Fig. 2, the coupling length of optical coupler 1A decreases due to the fact that input optical fiber 10 draws away from output optical fiber 20. On the other hand, the coupling length increases due to the fact that input optical fiber 10 approaches output optical fiber 20. The coupling length of optical coupler 1A is varied by making input optical fiber 10 approach or draw away from output optical fiber 20. Through this variation of the coupling length, optical coupler 1A allows the light traveling through input optical fiber 10 to be branched off into output optical fiber 20 only by the required amount when necessary.

Optical coupler 1A shown in Fig. 2 is configured such that curved part 14 is provided at small-diameter part 12 of input optical fiber 10 and on the other hand, small-diameter part 22 of output optical fiber 20 is linearly extended. However, optical coupler 1A may also be configured such that small-diameter part 12 of input optical fiber 10 is linearly extended and on the other hand, curved part 24 is provided at small-diameter part 22 of output optical fiber 20. In this case, the coupling length of optical coupler 1A is varied by making output optical fiber 20 approach or draw away from input optical fiber 10.

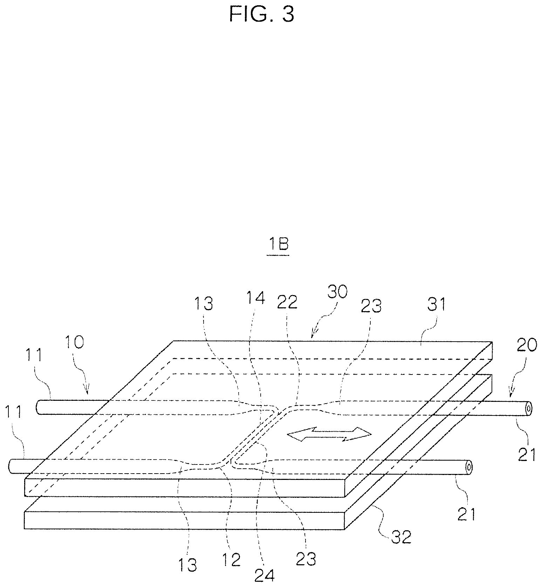

Fig. 3 shows optical coupler 1B in which input optical fiber 10 and output optical fiber 20 are accommodated in casing 30. Casing 30 is configured by upper surface member 31 and under surface member 32. Upper surface member 31 and under surface member 32 oppose one another with a certain spacing therebetween. It should be noted that, although not particularly shown in Fig. 3, a fixing member, such as a screw or the like, maintains the configuration in which a certain spacing is provided between upper surface member 31 and the under surface member 32. Input optical fiber 10 and output optical fiber 20 are accommodated in the space formed between upper surface member 31 and under surface member 32. Curved part 14 of input optical fiber 10 and curved part 24 of output optical fiber 20 make contact with each other in the casing 30.

Optical coupler 1B is configured such that output optical fiber 20 can be made to approach or draw away from input optical fiber 10 within casing 30. However, optical coupler 1B may also be configured such that input optical fiber 10 can be made to approach or draw away from output optical fiber 20 within casing 30. Moreover, optical coupler 1B may also be configured such that both input optical fiber 10 and output optical fiber 20 can be made to approach or draw away from one another by moving both within casing 30.

Optical coupler 1, 1A, 1B of the first embodiment may also be configured such that a resin for adjusting the refractive index of light is applied to the part where input optical fiber 10 and output optical fiber 20 make contact with each other. Examples of the resin for adjusting the refractive index include acrylic resin and epoxy resin having a refractive index close to that of glass.

[Second embodiment]

In optical coupler 2, 2A of the second embodiment, one or both of input optical fiber 10 and output optical fiber 20 has/have curved part(s) 14, 24 where small-diameter part(s) 12, 22 is/are curved. In optical coupler 2, curved part 14, 24 of one of input optical fiber 10 and output optical fiber 20 is made to contact with small-diameter part 12, 22 of the other one of input optical fiber 10 and output optical fiber 20, or both curved parts 14, 24 of input optical fiber 10 and output optical fiber 20 are made to contact with each other.

By centering around the part where input optical fiber 10 and output optical fiber 20 make contact with each other, one of input optical fiber 10 and output optical fiber 20 rotates in a direction twisted with respect to the other one of input optical fiber 10 and output optical fiber 20 in order to vary virtual plane P1, P11 formed by input optical fiber 10 and virtual plane P2, P22 formed by output optical fiber 20 within a predetermined angle range, and thus, the coupling length is varied.

In particular, optical coupler 2, 2A of the second embodiment is configured such that it is provided with: input optical fiber 10 that has small-diameter part 12, which is formed so as to have a relatively small outer diameter at a portion in the longitudinal direction, and that branches off the transmitted light by means of small-diameter part 12; and output optical fiber 20 that has small-diameter part 22, which is formed so as to have a relatively small outer diameter at a portion in the longitudinal direction, and that receives the light branched off from input optical fiber 10, wherein one or both of input optical fiber 10 and output optical fiber 20 has/have curved part(s) 14, 24 where small-diameter part(s) 12, 22 is/are curved, wherein curved part 14, 24 in small-diameter part 12, 22 of one of input optical fiber 10 and output optical fiber 20 is made to contact with linear small-diameter part 12, 22 of the other one of input optical fiber 10 and output optical fiber 20, or curved parts 14, 24 in small-diameter parts 12, 22 of both input optical fiber 10 and output optical fiber 20 are made to contact with each other, wherein the outer diameter of small-diameter parts 12, 22 of input optical fiber 10 and output optical fiber 20 is formed so as to be from 5 $\mu$m to 10 $\mu$m, inclusive, and wherein, by centering around the part where input optical fiber 10 and output optical fiber 20 make contact with each other, one of input optical fiber 10 and output optical fiber 20 rotates in a direction twisted with respect to the other one of input optical fiber 10 and output optical fiber 20 in order to vary virtual plane P1, P11 formed by input optical fiber 10 and virtual plane P2, P22 formed by output optical fiber 20 within the range of from 0 degrees to 5 degrees, inclusive, and the coupling length is therefore varied, and thus, branching ratio S of the light branched off from input optical fiber 10 into output optical fiber 20 is varied.

The method of branching light performed by such optical coupler 2, 2A is a method that makes use of optical coupler 2, 2A that is provided with: input optical fiber 10 that has small-diameter part 12, which is formed so as to have a relatively small outer diameter at a portion in the longitudinal direction, and that branches off the transmitted light by means of small-diameter part 12; and output optical fiber 20 that has small-diameter part 22, which is formed so as to have a relatively small outer diameter at a portion in the longitudinal direction, and that receives the light branched off from input optical fiber 10. One or both of input optical fiber 10 and output optical fiber 20 has/have curved part(s) 14, 24 where small-diameter part(s) 12, 22 is/are curved. Curved part 14, 24 in small-diameter part 12, 22 of one of input optical fiber 10 and output optical fiber 20 is made to contact with linear small-diameter part 12, 22 of the other one of input optical fiber 10 and output optical fiber 20, or curved parts 14, 24 in small-diameter parts 12, 22 of both input optical fiber 10 and output optical fiber 20 are made to contact with each other. The outer diameter of small-diameter parts 12, 22 of input optical fiber 10 and output optical fiber 20 is formed so as to be from 5 $\mu$m to 10 $\mu$m, inclusive. By centering

around the part where input optical fiber 10 and output optical fiber 20 make contact with each other, one of input optical fiber 10 and output optical fiber 20 rotates in a direction twisted with respect to the other one of input optical fiber 10 and output optical fiber 20 in order to vary virtual plane P1, P11 formed by input optical fiber 10 and virtual plane P2, P22 formed by output optical fiber 20 within the range of from 0 degrees to 5 degrees, inclusive, and the coupling length is therefore varied. Thus, branching ratio S of the light branched off from input optical fiber 10 into output optical fiber 20 is varied. Hereinafter, optical coupler 2, 2A will be specifically described with reference to the drawings.

As shown in Fig. 4, optical coupler 2 of the second embodiment has input optical fiber 10 and output optical fiber 20. It should be noted that the configurations of input optical fiber 10 itself and output optical fiber 20 itself configuring optical coupler 2 of the second embodiment are the same as those of input optical fiber 10 itself and output optical fiber 20 itself configuring optical coupler 1 of the first embodiment. Accordingly, the respective configurations of input optical fiber 10 and output optical fiber 20 of optical coupler 2 of the second embodiment will be denoted by the same reference numbers as those of the respective configurations of input optical fiber 10 and output optical fiber 20 of optical coupler 1 of the first embodiment, and thus, the detailed description thereof will be omitted.

Input optical fiber 10 of optical coupler 2 has body parts 11, small-diameter part 12 and connecting parts 13. In addition, small-diameter part 12 has curved part 14 by which the direction in which input optical fiber 10 extends is inverted. Similarly, output optical fiber 20 has body parts 21, small-diameter part 22 and connecting parts 23. In addition, small-diameter part 22 has curved part 24 by which the direction in which output optical fiber 20 extends is inverted. Curved part 14 of input optical fiber 10 and curved part 24 of output optical fiber 20 are made to contact with each other.

The outer diameter of input optical fiber 10 is 125 $\mu$m or less, and the diameter of the core is 10 $\mu$m or less. The outer diameter of small-diameter part 12 is from 5 $\mu$m to 10 $\mu$m, inclusive. In addition, the rate of outer diameter variation at connecting part 13 is from 0.05 % to 2.5 %, inclusive. It should be noted that this "rate of outer diameter variation" as used herein refers to a rate at which the outer diameter varies when moved by 1 mm in the longitudinal direction of input optical fiber 10. In addition, the difference between the core refractive index ($n_1$) and the cladding refractive index ($n_2$), which is expressed by formula 5, is approximately 0.3 %.

As with input optical fiber 10, the outer diameter of output optical fiber 20 is 125 $\mu$m or less, and the diameter of the core is 10 $\mu$m or less. The outer diameter of small-diameter part 22 is from 5 $\mu$m to 10 $\mu$m, inclusive. In addition, the rate of outer diameter variation at connecting part 23 is from 0.05 % to 2.5 %, inclusive. It should be noted that this "rate of outer diameter variation" as used herein refers to a rate at which the outer diameter varies when moved by 1 mm in the longitudinal direction of input optical fiber 10. In addition, the difference between the core refractive index ($n_1$) and the cladding refractive index ($n_2$), which is expressed by formula 5, is approximately 0.3 %.

As shown in Fig. 4, the coupling length of optical coupler 2 is varied, for example, due to the fact that output optical fiber 20 is rotated with respect to input optical fiber 10. In particular, input optical fiber 10 and output optical fiber 20 rotate between the configuration shown in Fig. 4(A) and the configuration shown in Fig. 4(B). The configuration shown in Fig. 4(A) is a configuration in which virtual plane P1 formed by input optical fiber 10 and virtual plane P2 formed by output optical fiber 20 are flush with each other. The configuration shown in Fig. 4(B) is a configuration in which virtual plane P1 formed by input optical fiber 10 and virtual plane P2 formed by output optical fiber 20 are orthogonal to each other.

In the configuration in which virtual plane P1 formed by input optical fiber 10 and virtual plane P2 formed by output optical fiber 20 are flush with each other, the length of the part where input optical fiber 10 and output optical fiber 20 make contact with each other is relatively long. Namely, in this configuration, the coupling length is long. On the other hand, in the configuration in which virtual plane P1 formed by input optical fiber 10 and virtual plane P2 formed by output optical fiber 20 are orthogonal to each other, the length of the part where input optical fiber 10 and output optical fiber 20 make contact with each other is relatively short. Namely, in this configuration, the coupling length is short.

The coupling length of optical coupler 2 varies in accordance with an angle formed between input optical fiber 10 (i.e. virtual plane P1 formed by input optical fiber 10) and output optical fiber 20 (i.e. virtual plane P2 formed by output optical fiber 20). Therefore, branching ratio S can be freely varied by adjusting the angle formed between input optical fiber 10 and output optical fiber 20.

It should be noted that optical coupler 2 of the second embodiment may assume any of; the configuration in which input optical fiber 10 is rotated with respect to output optical fiber 20; the configuration in which output optical fiber 20 is rotated with respect to input optical fiber 10; and the configuration in which both input optical fiber 10 and output optical fiber 20 are rotated.

The angle formed by input optical fiber 10 and output optical fiber 20 in optical coupler 2 varies within the range of from 0 degrees to 5 degrees, inclusive. At this time, branching ratio S varies within the range of from 0 % to 100 %, inclusive. For example, in Fig. 4(A), when light is transmitted from body part 11a of input optical fiber 10, with the angle formed between input optical fiber 10 and output optical fiber 20 being 1 degree, 50 % of the light proceeds to body part 11b of input optical fiber 10, and 50 % of the light is branched off into body part 21b of output optical fiber 20. No light is branched off into body part 21a of output optical fiber 20.

In the configuration shown in Fig. 4(B), with the angle formed between input optical fiber 10 and output optical fiber 20 being approximately 5 degrees, all the light transmitted from body part 11a of input optical fiber 10 proceeds into body part 11b of input optical fiber 10. The light transmitted from body part 11a of input optical fiber 10 does not branch off into output optical fiber 20.

In this way, the coupling length of optical coupler 2 is varied by rotating one of input optical fiber 10 and output optical fiber 20 with respect to the other one of input optical fiber 10 and output optical fiber 20. Therefore, through coupling length variation, optical coupler 2 allows the light traveling through input optical fiber 10 to be branched off into output optical fiber 20 only by the required amount when necessary.

It should be noted that, also for optical coupler 2 of the second embodiment, the above-described resin may be applied to the part where input optical fiber 10 and output optical fiber 20 make contact with each other in order to adjust the refractive index of the light.

Thus, the case in which both input optical fiber 10 and output optical fiber 20 have curved parts 14, 24 has been described. However, the optical coupler of the second embodiment may also be configured in such a manner that a curved part where the small-diameter part is curved is provided to one of input optical fiber 10 and output optical fiber 20. Fig. 5 shows an example thereof.

Input optical fiber 10 of optical coupler 2A shown in Fig. 5 is provided with body parts 11, small-diameter part 12 and connecting parts 13. In addition, small-diameter part 12 of input optical fiber 10 has curved part 14. The direction in which the input optical fiber extends is inverted by means of curved part 14. Output optical fiber is also provided with body parts 21, small-diameter part 22 and connecting parts 23. However, small-diameter part 22 extends linearly. Optical coupler 1A is configured such that curved part 14 of input optical fiber 10 makes contact with small-diameter part 22 of output optical fiber 20.

As shown in Fig. 5, the coupling length of optical coupler 1A is varied by rotating one of input optical fiber 10 and output optical fiber 20 in a direction twisted with respect to the other one of input optical fiber 10 and output optical fiber 20 while centering around the part where input optical fiber 10 and output optical fiber 20 make contact with each other, and by varying virtual plane P11 formed by input optical fiber 10 and virtual plane P22 formed by output optical fiber 20 within a predetermined angle range.

It should be noted that optical coupler 2A shown in Fig. 5 is configured by providing curved part 14 to small-diameter part 12 of input optical fiber 10, and, on the other hand, by extending small-diameter part 22 of output optical fiber 20. However, optical coupler 2A may also be configured by extending small-diameter part 12 of input optical fiber 10, and, on the other hand, by providing curved part 24 to small-diameter part 22 of output optical fiber 20.

[Third embodiment]

One of input optical fiber 10 and output optical fiber 40 of optical coupler 3 of the third embodiment has curved part 14 where small-diameter part 12, 42 thereof is curved, and the propagation constant of the optical fibers varies by input optical fiber 10 sliding over small-diameter part 42 of output optical fiber 40 in the direction in which small-diameter part 42 of output optical fiber 40 extends, or by output optical fiber 40 sliding over small-diameter part 12 of input optical fiber 10 in the direction in which small-diameter part 12 of input optical fiber 10 extends.

In particular, optical coupler 3 of the third embodiment is configured such that it is provided with: input optical fiber 10 that has small-diameter part 12, which is formed so as to have a relatively small outer diameter at a portion in the longitudinal direction, and that branches out transmitted light by means of small-diameter part 12; and output optical fiber 40 that has small-diameter part 42, which is formed so as to have a relatively small outer diameter at a portion in the longitudinal direction, and that receives the light branched off from input optical fiber 10, wherein one of input optical fiber 10 and output optical fiber 40 has a curved part where small-diameter part 12, 42 thereof is curved, and wherein, by input optical fiber 10 sliding between connecting parts 43 that connect body part 41 of output optical fiber 40 and small-diameter part 42 to each other, or by output optical fiber 40 sliding between connecting parts 13 that connect body part 11 of input optical fiber 10 and small-diameter part 12 to each other, the relative position between input optical fiber 10 and output optical fiber 40 is adjusted, the difference in propagation constant between input optical fiber 10 and output optical fiber 40 is varied, and thus, branching ratio S of the light branched off from input optical fiber 10 into output optical fiber 40 is varied.

The method of branching light performed by such optical coupler 3 is a method that makes use of optical coupler 3 that is provided with: input optical fiber 10 that has small-diameter part 12, which is formed so as to have a relatively small outer diameter at a portion in the longitudinal direction, and that branches out transmitted light by means of small-diameter part 12; and output optical fiber 40 that has small-diameter part 42, which is formed so as to have a relatively small outer diameter at a portion in the longitudinal direction, and that receives the light branched off from input optical fiber 10. One of input optical fiber 10 and output optical fiber 40 has a curved part where small-diameter part 12, 42 thereof is curved. By input optical fiber 10 sliding between connecting parts 43 that connect body part 41 of output optical fiber 40 and small-diameter part 42 to each other, or by output optical fiber 40 sliding between connecting parts 13 that connect body part 11 of input optical fiber 10 and small-diameter part 12 to each other, the relative position between input optical fiber 10 and output optical fiber 40 is adjusted, the difference in propagation constant between input optical fiber 10 and output optical fiber 40 is varied, and thus, branching ratio S of the light branched off from input optical fiber 10 into output optical fiber 40 is varied. Hereinafter, optical coupler 3 will be specifically described with reference to the drawings.

As shown in Fig. 6, optical coupler 3 of the third embodiment has input optical fiber 10 and output optical fiber 40. It should be noted that the configuration of input optical fiber 10 of optical coupler 3 is similar to that of input optical fiber 10 of optical coupler 1 of the first embodiment. Accordingly, the configuration of input optical fiber 10 of optical coupler 3 will be denoted by the same reference numbers as those of the configuration of input optical fiber 10 of optical coupler 1 of the first embodiment, and thus, the detailed description thereof will be omitted.

Input optical fiber 10 has body parts 11, small-diameter part 12 and connecting parts 13. In addition, small-diameter part 12 of input optical fiber 10 has curved part 14 by which the direction in which input optical fiber 10 extends is inverted. The outer diameter of input optical fiber 10 is 125 $\mu$m or less, and the diameter of the core is 10 $\mu$m or less. The outer diameter of small-diameter part 12 is from 5 $\mu$m to 20 $\mu$m, inclusive. In addition, the rate of outer diameter variation at connecting part 13 is from 0.05 % to 2.5 %, inclusive. It should be noted that this "rate of outer diameter variation" as used herein refers to a rate at which the outer diameter varies when moved by 1 mm in the longitudinal direction of input optical fiber 10. In addition, the difference between the core refractive index ($n_1$) and the cladding refractive index ($n_2$), which is expressed by formula 5, is approximately 0.3 %.

Output optical fiber 40 extends in a linear manner. Output optical fiber 40 has body parts 41, small-diameter part 42 and a pair of connecting parts 43. Body part 41 is a part where it has an outer diameter corresponding to that of the optical fiber itself. Small-diameter part 42 is a part that is formed so as to have a relatively small outer diameter at a portion in the longitudinal direction. Connecting parts 43 are parts, on both sides of small-diameter part 42 in the longitudinal direction, where the outer diameter thereof gradually decreases from body part 41 toward small-diameter part 42 and which connect body part 41 to small-diameter part 42. The outer diameter of body part 41, small-diameter part 42 and connecting parts 43 of output optical fiber 40 may be formed so as to be the same as that of body part 11, small-diameter part 12 and connecting part 13 of input optical fiber 10, or alternatively, the former may be formed larger than the latter.

The outer diameter of output optical fiber 40 is 125 $\mu$m or less, and the diameter of the core is 10 $\mu$m or less. The outer diameter of small-diameter part 42 is from 1 $\mu$m to 20 $\mu$m, inclusive. In addition, the rate of outer diameter variation at connecting part 43 is from 0.05 % to 2.5 %, inclusive. It should be noted that this "rate of outer diameter variation" as used herein refers to a rate at which the outer diameter varies when moved by 1 mm in the longitudinal direction of input optical fiber 10. In addition, the difference between the core refractive index ($n_1$) and the cladding refractive index ($n_2$), which is expressed by formula 5, is approximately 0.3 %.

In optical coupler 3, curved part 14 of input optical fiber 10 makes contact with an outer periphery of output optical fiber 40. The propagation constant of the optical fibers varies by means of input optical fiber 10 sliding between connecting parts 43 of output optical fiber 40. Namely, in optical coupler 3, branching ratio S can be freely varied by adjusting the relative position of input optical fiber 10 with respect to output optical fiber 40.

Optical coupler 3 of this embodiment makes use of difference $\delta$ between propagation constant $\beta$ of input optical fiber 10 and propagation constant $\beta$ of output optical fiber 40 in order to vary branching ratio S. Difference $\delta$ in propagation constant $\beta$ may be determined by formula 6. It should be noted that propagation constant $\beta$ may be expressed by formula 7. However, the value determined by formula 7 is the propagation constant in the longitudinal direction of the optical fiber.

$$\delta = (\beta_1 - \beta_2)/2 \qquad \text{(formula 6)}$$

It should be noted that $\beta_1$ denotes the propagation constant of input optical fiber 10 and $\beta_2$ denotes the propagation constant of output optical fiber 40.

$$\beta = n_1 k \cos\theta \qquad \text{(formula 7)}$$

It should be noted that, in formula 7, $n_1$ denotes the core refractive index and k denotes a value determined by formula 4. As shown in formula 7, propagation constant $\beta$ varies depending on the core diameter and the core refractive index. When a difference in the propagation constant occurs, F, expressed by formula 8, varies and coupled light output P, expressed by formula 9, varies. Accordingly, branching ratio S of optical coupler 3 varies.

$$F = 1/1 + (\delta/x)^2 \qquad \text{(formula 8)}$$

It should be noted that, in formula 8, x denotes a mode coupling constant.

$$P = F\sin^2(qz) \qquad \text{(formula 9)}$$

It should be noted that, in formula 9, qz denotes a normalized distance.

For example, when the outer diameter of the small-diameter part of the input optical fiber is 2 μm, the outer diameter of the output optical fiber is 2 μm, the coupling length is 4 mm and the coupling rate is 80 %, the coupling rate when the coupling fiber is moved by 2 mm is 20 %.

Here, the mechanism by which propagation constant β is varied will be described. For example, in optical coupler 3, input optical fiber 10 slides between connecting parts 42 which connect body part 41 of output optical fiber 40 to small-diameter part 42 thereof. In this case, input optical fiber 10 not only slides over small-diameter part 42 of output optical fiber 40 but also slides over connecting parts 43 where the outer diameter of output optical fiber 40 varies.

The outer diameter of input optical fiber 10 and output optical fiber 40 configuring optical coupler 3 varies at the respective connecting parts 13, 43. The diameter of the core inside varies in association with the variation of the outer diameter. More specifically, the diameter of the core of input optical fiber 10 or output optical fiber 40 is smaller at small-diameter part 12, 42 than at body part 11, 41.

It should be noted that, when the width of a waveguide (the core diameter) is made sufficiently large in an optical fiber, light is only guided through the core. On the other hand, when the width of the waveguide (the core diameter) is small, the energy distribution of light is also present in a cladding outside the core. This phenomenon occurs due to the fact that the core refractive index varies when the core diameter varies.

As is clear from formula 7, propagation constant β varies in association with the variation of core refractive index $n_1$. In addition, core refractive index $n_1$, as discussed above, varies in association with the variation of the core diameter. Accordingly, core refractive index $n_1$ varies in association with the variation of the core diameter and as a result, propagation constant β varies.

In optical coupler 3 of this embodiment, for example, input optical fiber 10 not only slides over the small-diameter part of optical fiber 40 but also slides over connecting parts 43 where the outer diameter of the optical fiber varies. At connecting parts 43, not only the outer diameter of output optical fiber 40 but also the core diameter varies. Thus, when connecting parts 43 are subjected to the sliding, refractive index $n_1$ varies in association with the variation of the core diameter, and as a result, propagation constant β varies.

It should be noted that, also for optical coupler 3 of the third embodiment, the above-described resin may be applied to the part where input optical fiber 10 and output optical fiber 40 make contact with each other in order to adjust the refractive index of the light.

Thus, the case in which optical coupler 3 is configured by input optical fiber 10 having curved part 14 and output optical fiber 40 extending in a linear manner has been described. However, although not particularly illustrated in the drawings, the optical coupler of the third embodiment may also be configured by an input optical fiber extending in a linear manner and an output optical fiber having a curved part. In such case, the propagation constant is varied by moving the output optical fiber along the small-diameter part of the input optical fiber.

[Fourth embodiment]

Optical coupler 4 of fourth embodiment is configured such that it is provided with: input optical fiber 10 that has small-diameter part 12, which is formed so as to have a relatively small outer diameter at a portion in the longitudinal direction, and that branches off transmitted light by means of small-diameter part 12; and photodiode 50 that receives the light branched off from input optical fiber 10, wherein input optical fiber 10 has curved part 14 where small-diameter part 12 thereof is curved, wherein curved part 14 of input optical fiber 10 is made to contact with an apical surface of photodiode 50, and wherein, through utilization of the elastic force in curved part 14 of input optical fiber 10, the force by which input optical fiber 10 is pressed against photodiode 50 is varied by input optical fiber 10 and photodiode 50 approaching one another such that the coupling length is increased, and on the other hand, the force by which input optical fiber 10 is pressed against photodiode 50 is varied by input optical fiber 10 and photodiode 50 being drawn away from each other such that the coupling length is decreased, and thus, branching ratio S of the light branched off from input optical fiber 10 into photodiode 50 is varied.

The method of branching light performed by such optical coupler 4 is a method that makes use of optical coupler 4 that is provided with: input optical fiber 10 that has small-diameter part 12, which is formed so as to have a relatively small outer diameter at a portion in the longitudinal direction, and that branches off transmitted light by means of small-diameter part 12; and photodiode 50 that receives the light branched off from input optical fiber 10. Input optical fiber 10 has curved part 14 where small-diameter part 12 thereof is curved. Curved part 14 of input optical fiber 10 is made to contact with an apical surface of photodiode 50. Through utilization of the elastic force in curved part 14 of input optical fiber 10, the force by which input optical fiber 10 is pressed against photodiode 50 is varied by making input optical fiber 10 and photodiode 50 approach one another such that the coupling length is increased. On the other hand, the force by which input optical fiber 10 is pressed against photodiode 50 is varied by drawing input optical fiber 10 away from photodiode 50 such that the coupling length is decreased. Thus, branching ratio S of the light branched off from input optical fiber 10 into photodiode 50 is varied.

It should be noted that the configuration of input optical fiber 10 of optical coupler 4 is similar to that of input optical fiber 10 of optical coupler 1 of the first embodiment. Accordingly, the configuration of input optical fiber 10 of optical coupler 4 will be denoted by the same reference numbers as those of the configuration of input optical fiber 10 of optical coupler 1 of the first embodiment, and thus, the detailed description thereof will be omitted.

Input optical fiber 10 has body parts 11, small-diameter part 12 and connecting parts 13. In addition, small-diameter part 12 of input optical fiber 10 has curved part 14 by which the direction in which input optical fiber 10 extends is inverted. The outer diameter of input optical fiber 10 is 125 $\mu$m or less, and the diameter of the core is 10 $\mu$m or less. The outer diameter of small-diameter part 12 is from 1 $\mu$m to 20 $\mu$m, inclusive. In addition, the rate of outer diameter variation at connecting part 13 is from 0.05 % to 2.5 %, inclusive. It should be noted that this "rate of outer diameter variation" as used herein refers to a rate at which the outer diameter varies when moved by 1 mm in the longitudinal direction of input optical fiber 10. In addition, the difference between the core refractive index ($n_1$) and the cladding refractive index ($n_2$), which is expressed by formula 5, is approximately 0.3 %.

Photodiode 50 is a semiconductor diode that functions as an optical detector. Photodiodes having various structures, such as a PN-type, a PIN-type, a Schottky-type, an avalanche (APD)-type, or the like, may be used for photodiode 50.

Optical coupler 4 is configured such that curved part 14 of input optical fiber 10 makes contact with apical surface 51 of photodiode 50. As shown in Fig. 7(A), the coupling length decreases due to the fact that input optical fiber 10 and photodiode 50 are drawn away from each other. On the other hand, as shown in Fig. 7(B), the coupling length increases due to the fact that input optical fiber 10 and photodiode 50 approach one another. In this manner, the coupling length of optical coupler 4 is varied by making input optical fiber 10 and photodiode 50 approach or draw away from one another. Through this variation of the coupling length, optical coupler 4 allows the light traveling through input optical fiber 10 to be branched off into photodiode 50 by the required amount when necessary.

In optical coupler 4, the coupling length is varied by adjusting the force of pressing input optical fiber 10 and photodiode 50 against each other. Accordingly, branching ratio S can be freely varied by adjusting the force of pressing against each other. In addition, since the elastic force of curved part 14 can be utilized when making input optical fiber 10 and photodiode 50 approach or draw away from one another, the structure of optical coupler 4 can be simplified.

The coupling length of optical coupler 4 varies within the range of from 1 mm to 5 mm, inclusive. At this time, branching ratio S varies within the range of 5 % or less. For example, when the coupling length is 3 mm, 85 % of the light transmitted from body part 11a of input optical fiber 10 proceeds to body part 11b of input optical fiber 10 B, and 5 % of the light branches off into photodiode 50.

It should be noted that, also for optical coupler 4 of the fourth embodiment, the above-described resin may be applied to the part where input optical fiber 10 and photodiode 50 make contact with each other in order to adjust the refractive index of the light.

Thus, optical couplers 1, 1A, 1B, 2, 2A, 3, 4 of the first embodiment through the fourth embodiment have been described. Optical couplers 1, 1A, 1B, 2, 2A, 3, 4 can also make use of the property in which branching ratio S depends on the light wavelengths.

As illustrated in the above-described formula 1 and formula 2, branching ratio S depends on the wavelength of incident light. This property is applied to optical couplers 1, 1A, 1B, 2, 2A, 3, 4. For example, light having wavelength $\lambda$1 and light having wavelength $\lambda$2 are made to be incident on input optical fiber 10 of optical coupler 1 of the first embodiment so as to vary the coupling length. When the property of branching ratio S being dependent on the wavelength of light is utilized, the difference can be provided between branching ratios S of the light beams with the respective wavelengths by varying the coupling length. It should be noted that, here, it is assumed that the branching ratio of the light having wavelength $\lambda$1 is S$\lambda$1 and that the branching ratio of the light having wavelength $\lambda$2 is S$\lambda$2. In addition, it is assumed that (S$\lambda$1, S$\lambda$2) represents a value of the branching ratio of each wavelength when the light having wavelength $\lambda$1 and the light having wavelength $\lambda$2 are made to be incident on optical coupler 1.

When the property of branching ratio S being dependent on the wavelength of light is utilized, (S$\lambda$1, S$\lambda$2) may be set as, for example, (0%, 0%) (100%, 100%), (50%, 100%), (0%, 50%), (50%, 0%), (100%, 0%) in order to provide the difference between branching ratios S of the light beams with the respective wavelengths. It should be noted that the branching ratios of the light beams with the respective wavelengths indicated herein only provide examples, and the branching ratios of the light beams with the respective wavelengths may also be set by providing the difference to numerical values other than the numerical values above. In addition, the number of types of the wavelengths of incident light is not limited to two, and rather, light beams with more than two types of wavelength may also be made incident.

In optical couplers 1, 1A, 1B, 2, 2A, 3, 4 of the first embodiment through the fourth embodiment, when the property of branching ratio S being dependent on the wavelength of light is utilized, for example, a selection switch for selecting a wavelength to be made incident is provided to optical coupler 1, 1A, 1B, 2, 2A, 3, 4.

In addition, in optical couplers 1, 1A, 1B, 2, 2A, 3, 4 of first embodiments through fourth embodiment, when the property of branching ratio S being dependent on the wavelength of light is utilized, it is possible, for example, to give the variation in wavelength of a light source in light power (in a unit of watts (W)) or to give information on length (movement amount) by varying the coupling length so that the light power is constant. More specifically, when the property of branching ratio S being dependent on the wavelength of light is utilized, optical coupler 1, 1A, 1B, 2, 2A, 3, 4 functions as a wavelength monitor.

[Experiment example]

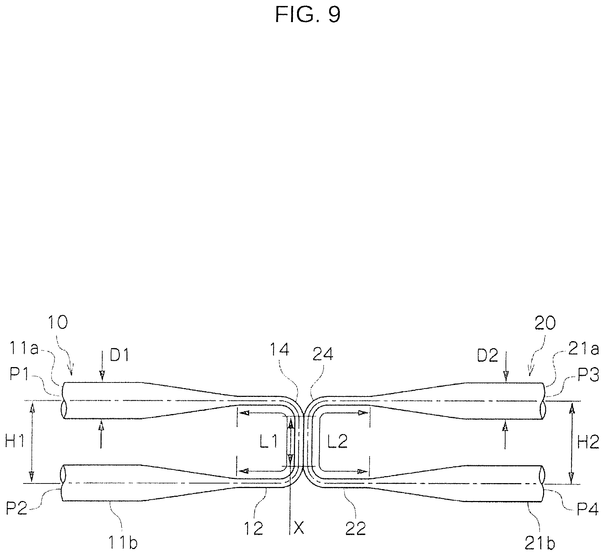

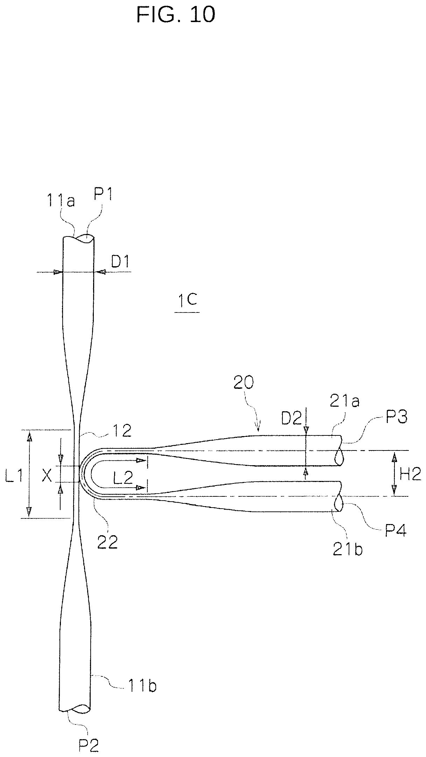

An experiment was carried out by configuring optical coupler 1 by making small-diameter part 12 of input optical fiber 10 and small-diameter part 22 of output optical fiber 20 contact with each other as shown in Figs. 9 and 10, and by determining coupling rate S of optical coupler 1. Optical coupler 1 shown in Fig. 9 has a configuration in which curved parts 14, 24 are provided to both small-diameter part 12 of input optical fiber 10 and small-diameter part 22 of output optical fiber 20. Optical coupler 1C has a configuration in which small-diameter part 12 of input optical fiber 10 is extended in a linear manner and curved part 24 is only provided to small-diameter part 22 of output optical fiber 20.

When carrying out the experiment, two types were prepared for optical coupler 1 shown in Fig. 9. One type was optical coupler 1, in which resin was applied to the part where small-diameter part 12 of input optical fiber 10 and small-diameter part 14 of output optical fiber 20 make contact with each other. The other type was optical coupler 1, in which no resin was applied. The experiment was carried out by varying coupling length X of the respective optical couplers 1 so as to determine how coupling rate S varied. In doing so, light having a wavelength of 1550 nm was input from first port P1 of optical coupler 1 and outputs from second port P2 and fourth port P4 were measured. It should be noted that this coupling rate S as used herein refers to the proportion of the output from fourth port P4 with respect to the input to first port P1. The applied resin was epoxy resin having a refractive index close to that of glass. It should be noted that, hereinafter, regarding optical coupler 1 shown in Fig. 9, the description will be given with optical coupler 1 applied with no resin being referred to as Sample 1 and optical coupler 1 applied with resin being referred to as Sample 2.

On the other hand, in the experiment carried out on the coupler 1C shown in Fig. 10, no resin was applied to the part where small-diameter part 12 of input optical fiber 10 and small-diameter part 22 of output optical fiber 20 make contact with each other, and coupling length X of optical coupler 1C was varied so as to determined how coupling rate S varied. In doing so, light having a wavelength of 1550 nm was input from first port P1 of optical coupler 1C and the outputs from second port P2 and fourth port P4 were measured. It should be noted that, hereinafter, the experiment regarding coupler 1C shown in Fig. 10 will be referred to as Sample 3.

Outer diameter D1 of input optical fiber 10 and outer diameter D2 of output optical fiber 20 of Samples 1, 2 and 3 used in the experiment were all 125 $\mu$m. Lengths L1, L2 of the small-diameter parts of input optical fiber 10 and output optical fiber 20 in Sample 1 were both 6.0 mm. Both spacing H1 between body part 11a and body part 11b of input optical fiber 10 and spacing H2 between body part 21a and body part 21b of output optical fiber 20 were 9.0 mm.

Lengths L1, L2 of the small-diameter parts of input optical fiber 10 and output optical fiber 20 in Sample 2 were both 6.0 mm. In addition, both spacing H1 between body part 11a and body part 11b of input optical fiber 10 and spacing H2 between body part 12a and body part 12b of output optical fiber 20 were 9.0 mm.

Lengths L1, L2 of the small-diameter parts of Sample 3 were 4.0 mm.

Regarding Samples 1 and 2, coupling length X was varied from approximately 1 mm to approximately 5 mm so as to determine coupling rate S. Regarding Sample 3, coupling length X was varied from approximately 0.5 mm to approximately 1.5 mm so as to determine coupling rate S.

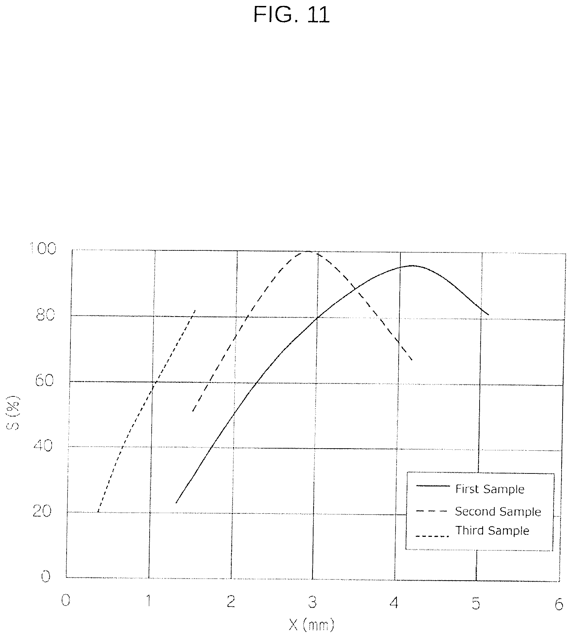

Fig. 11 shows the measurement results. The horizontal axis of the graph shown in Fig. 11 represents coupling length X and the vertical axis represents coupling rate S. In addition, in Fig. 11, the solid line represents the measurement results of Sample 1, the broken line represents the measurement results of Sample 2 and the dotted line represents the measurement results of Sample 3.

(Measurement results of Sample 1)

In Sample 1, as coupling length X increased, coupling rate S also increased up to the range where coupling length X reached a certain length. When coupling length X was approximately 4 mm, coupling rate S reached its peak. The peak value of coupling rate S of Sample 1 was approximately 96 %. In the range where coupling length X exceeded 4 mm, coupling rate S decreased as coupling length X increased.

(Measurement results of Sample 2)

As with Sample 1, in Sample 2, as coupling length X increased, coupling rate S also increased up to the range where coupling length X reached a certain length. Coupling rate S reached its peak when coupling length X was slightly shorter than 3 mm. The peak value of coupling rate S of Sample 2 was 100 %. In other words, light input from first port P1 was not branched off into second and third ports and it was all output to fourth port P4. In the range where coupling length X exceeded 3 mm, coupling rate S decreased as coupling length X increased.

As can be seen from the measurement results of Sample 1 and the measurement results of Sample 2, when curved parts 14, 24 were provided to both input optical fiber 10 and output optical fiber 20, coupling rate S increased until coupling length X reached a certain length and coupling rate S decreased when coupling length X exceeded such certain length. In addition, when optical coupler 1 was formed using input optical fiber 10 and output optical fiber 20 of the same configuration and the conditions were matched, optical coupler 1 applied with resin could obtain a higher coupling rate S than that of optical coupler 1 not applied with resin.

(Measurement results of Sample 3)

In Sample 3, when coupling length X was varied in the above-described range, coupling rate S kept on increasing as coupling length X increased and coupling rate S never decreased.

As can be seen from the measurement results of Sample 3, when optical coupler 1A is configured by linear input optical fiber 10 and output optical fiber 20 having curved part 24, coupling rate S increased as coupling length X increased and it never decreased.

| | |
|---|---|
| 1 | Optical coupler |
| 1A | Optical coupler |
| 1B | Optical coupler |
| 2 | Optical coupler |
| 2A | Optical coupler |
| 3 | Optical coupler |
| 4 | Optical coupler |
| 10 | Input optical fiber |
| 11 | Body part |
| 12 | Small-diameter part |
| 13 | Connecting part |
| 14 | Curved part |
| 20 | Output optical fiber |
| 21 | Body part |
| 22 | Small-diameter part |
| 23 | Connecting part |
| 24 | Curved part |
| 30 | Casing |
| 40 | Output optical fiber |
| 41 | Body part |
| 42 | Small-diameter part |
| 43 | Connecting part |
| 50 | Photodiode |
| 51 | Apical surface |

**Claims**

**1.** An optical coupler, comprising:

an input optical fiber that has a small-diameter part, which has a relatively small outer diameter at a portion in the longitudinal direction, and that branches off transmitted light by the small-diameter part; and
an output optical fiber that has a small-diameter part, which has a relatively small outer diameter at a portion in the longitudinal direction, and that receives the light branched off from the input optical fiber,
wherein one or both of the input optical fiber and the output optical fiber have the small-diameter parts that are curved,

wherein the curved parts in the small-diameter parts of one of the input optical fiber and the output optical fiber is caused to contact with linear small-diameter parts of the other one of the input optical fiber and the output optical fiber, or the curved parts in the small-diameter parts of both the input optical fiber and the output optical fiber are caused to contact with each other,

wherein, through utilization of elastic force in the curved parts of at least one of the input optical fiber and the output optical fiber, pressing force of the input optical fiber and the output optical fiber is varied by making the input optical fiber and the output optical fiber approach one another, in order to increase coupling length which is length along which the small-diameter part of the input optical fiber and the small-diameter part of the output optical fiber are made to contact with each other, and by making the input optical fiber and the output optical fiber draw away from each other in order to decrease the coupling length, and

wherein, by varying the pressing force, branching ratio of the light branched off from the input optical fiber into the output optical fiber is varied based on the coupling length.

2. An optical coupler, comprising:

an input optical fiber that has a small-diameter part, which has a relatively small outer diameter at a portion in the longitudinal direction, and that branches off transmitted light by the small-diameter part; and

an output optical fiber that has a small-diameter part, which has a relatively small outer diameter at a portion in the longitudinal direction, and that receives the light branched off from the input optical fiber,

wherein one or both of the input optical fiber and the output optical fiber have the small-diameter parts that are curved,

wherein the curved parts in the small-diameter parts of one of the input optical fiber and the output optical fiber is caused to contact with linear small-diameter parts of the other one of the input optical fiber and the output optical fiber, or the curved parts in the small-diameter parts of both the input optical fiber and the output optical fiber are caused to contact with each other,

wherein the outer diameter of the small-diameter parts of the input optical fiber and output optical fiber is from 5 $\mu$m to 10 $\mu$m, inclusive,

wherein, by centering around the part where the input optical fiber and output optical fiber make contact with each other, one of the input optical fiber and the output optical fiber rotates in a direction twisted with respect to the other one of the input optical fiber and the output optical fiber in order to vary a virtual plane formed by the input optical fiber and a virtual plane formed by the output optical fiber within the range of from 0 degrees to 5 degrees, inclusive,

wherein the coupling length is varied by varying the virtual plane formed by the input optical fiber and the virtual plane formed by the output optical fiber, and

wherein, the branching ratio of the light branched off from the input optical fiber into output the optical fiber is varied based on the coupling length.

3. An optical coupler, comprising:

an input optical fiber that has a small-diameter part, which has a relatively small outer diameter at a portion in the longitudinal direction, and that branches off transmitted light by the small-diameter part; and

an output optical fiber that has a small-diameter part, which has a relatively small outer diameter at a portion in the longitudinal direction, and that receives the light branched off from the input optical fiber,

wherein one or both of the input optical fiber and the output optical fiber have the small-diameter parts that are curved,

wherein, by the input optical fiber sliding between connecting parts of the output optical fiber, the connecting parts connecting a body part of the output optical fiber and the small-diameter part of the output optical fiber, or by the output optical fiber sliding between connecting parts of the input optical fiber, the connecting parts connecting a body part of the input optical fiber and the small-diameter part of the input optical fiber, the relative position between the input optical fiber and the output optical fiber is adjusted, in order to vary the difference in a propagation constant between the input optical fiber and the output optical fiber, and

wherein, the branching ratio of the light branched off from the input optical fiber into output the optical fiber is varied by varying the difference in the propagation constant.

4. An optical coupler, comprising:

an input optical fiber that has a small-diameter part, which has a relatively small outer diameter at a portion in the longitudinal direction, and that branches off transmitted light by the small-diameter part; and

a photodiode that receives the light branched off from the input optical fiber,

wherein the input optical fiber has the small-diameter part that are curved, wherein, the curved part of the input optical fiber is made to contact with an apical surface of the photodiode,

wherein, through utilization of elastic force in the curved part of the input optical fiber, the force by which the input optical fiber is pressed against the photodiode is varied, by making the input optical fiber and the photodiode approach one another in order to increase the coupling length, and by drawing the input optical fiber away from the photodiode in order to decrease the coupling length, and

wherein branching ratio of the light branched off from the input optical fiber into the output optical fiber is varied based on the coupling length.

5. A method of branching light using an optical coupler that has an input optical fiber and an output optical fiber, the input optical fiber having a small-diameter part, which has a relatively small outer diameter at a portion in the longitudinal direction, and branching off transmitted light by the small-diameter part; and the output optical fiber having a small-diameter part, which has a relatively small outer diameter at a portion in the longitudinal direction, and receiving the light branched off from the input optical fiber, one or both of the input optical fiber and the output optical fiber having the small-diameter parts that are curved, the method comprising:

making the curved parts in the small-diameter parts of one of the input optical fiber and the output optical fiber to contact with linear small-diameter parts of the other one of the input optical fiber and the output optical fiber, or making curved parts in the small-diameter parts of both the input optical fiber and the output optical fiber to contact with each other;

varying pressing force of the input optical fiber and the output optical fiber, through utilization of elastic force in the curved parts of at least one of the input optical fiber and the output optical fiber, by making the input optical fiber and the output optical fiber approach one another, in order to increase coupling length which is length along which the small-diameter part of the input optical fiber and the small-diameter part of the output optical fiber are made to contact with each other, and by making the input optical fiber and the output optical fiber draw away from each other in order to decrease the coupling length; and

varying branching ratio of the light branched off from the input optical fiber into the output optical fiber by varying the pressing force.

6. A method of branching light using an optical coupler that has an input optical fiber and an output optical fiber, the input optical fiber having a small-diameter part, which has a relatively small outer diameter at a portion in the longitudinal direction, and branching off transmitted light by the small-diameter part; and the output optical fiber having a small-diameter part, which has a relatively small outer diameter at a portion in the longitudinal direction, and receiving the light branched off from the input optical fiber, one or both of the input optical fiber and the output optical fiber having the small-diameter parts that are curved, the method comprising:

making the curved parts in the small-diameter parts of one of the input optical fiber and the output optical fiber to contact with linear small-diameter parts of the other one of the input optical fiber and the output optical fiber, or making curved parts in the small-diameter parts of both the input optical fiber and the output optical fiber to contact with each other;

forming the outer diameter of the small-diameter parts of the input optical fiber and output optical from 5 $\mu$m to 10 $\mu$m, inclusive;

rotating one of the input optical fiber and the output optical fiber in a direction twisted with respect to the other one of the input optical fiber and the output optical fiber, by centering around the part where the input optical fiber and output optical fiber make contact with each other, in order to vary a virtual plane formed by the input optical fiber and a virtual plane formed by the output optical fiber within the range of from 0 degrees to 5 degrees, inclusive;

varying the coupling length by varying the virtual plane formed by the input optical fiber and the virtual plane formed by the output optical fiber; and

varying the branching ratio of the light branched off from the input optical fiber into output the optical fiber.

7. A method of branching light using an optical coupler that has an input optical fiber and an output optical fiber, the input optical fiber having a small-diameter part, which has a relatively small outer diameter at a portion in the longitudinal direction, and branching off transmitted light by the small-diameter part; and the output optical fiber having a small-diameter part, which has a relatively small outer diameter at a portion in the longitudinal direction, and receiving the light branched off from the input optical fiber, one or both of the input optical fiber and the output optical fiber having the small-diameter parts that are curved, the method comprising:

adjusting the relative position between the input optical fiber and the output optical fiber, by the input optical fiber sliding between connecting parts of the output optical fiber, the connecting parts connecting a body part of the output optical fiber and the small-diameter part of the output optical fiber, or by the output optical fiber sliding between connecting parts of the input optical fiber, the connecting parts connecting a body part of the input optical fiber and the small-diameter part of the input optical fiber, in order to vary the difference in a propagation constant between the input optical fiber and the output optical fiber; and
varying the branching ratio of the light branched off from the input optical fiber into output the optical fiber by varying the difference in the propagation constant.

8. A method of branching light using an optical coupler that has an input optical fiber that has a small-diameter part, which has a relatively small outer diameter at a portion in the longitudinal direction, and that branches off transmitted light by the small-diameter part, and a photodiode that receives the light branched off from the input optical fiber, the input optical fiber having the small-diameter part that are curved, the method comprising:

making the curved part of the input optical fiber to contact with an apical surface of the photodiode,
varying the force by which the input optical fiber is pressed against the photodiode, through utilization of elastic force in the curved part of the input optical fiber, by making the input optical fiber and the photodiode approach one another in order to increase the coupling length, and by drawing the input optical fiber away from the photodiode in order to decrease the coupling length, and
varying the branching ratio of the light branched off from the input optical fiber into the output optical fiber based on the coupling length.

# FIG. 1

(A)

(B)

## FIG. 2

1A

21a

21

20

23

10

11a 11 13

11

22

11b

13

12

11

23

21

21b

FIG. 3

# FIG. 4

(A)

(B)

FIG. 5

FIG. 6

FIG. 7

(A)

(B)

FIG. 8

L (mm)

## FIG. 9

FIG. 10

FIG. 11

## INTERNATIONAL SEARCH REPORT

| | International application No. |
|---|---|
| | PCT/JP2015/069408 |

### A. CLASSIFICATION OF SUBJECT MATTER
*G02B6/28*(2006.01)i, *G02B6/42*(2006.01)i, *G02B26/02*(2006.01)i

According to International Patent Classification (IPC) or to both national classification and IPC

### B. FIELDS SEARCHED

Minimum documentation searched (classification system followed by classification symbols)
G02B6/26-6/34, G02B6/42-6/43, G02B26/02

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 08-234045 A   (The Furukawa Electric Co., Ltd.), 13 September 1996 (13.09.1996), paragraphs [0028] to [0045]; fig. 1 to 18 (Family: none) | 1-8 |
| A | JP 2005-250221 A   (Anritsu Corp.), 15 September 2005 (15.09.2005), paragraphs [0018] to [0036]; fig. 1 to 3, 7 (Family: none) | 1-8 |

☒   Further documents are listed in the continuation of Box C.          ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 September 2015 (07.09.15) | 15 September 2015 (15.09.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

| International application No. |
| --- |
| PCT/JP2015/069408 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Microfilm of the specification and drawings annexed to the request of Japanese Utility Model Application No. 142118/1988(Laid-open No. 062502/1990) (Yokogawa Electric Corp.), 10 May 1990 (10.05.1990), page 1, line 17 to page 3, line 6; fig. 5 to 6 (Family: none) | 1-8 |
| A | JP 2004-519016 A (Deutsche Telekom AG.), 24 June 2004 (24.06.2004), paragraphs [0023] to [0032]; fig. 1 to 3 & WO 2002/067029 A1 & US 2004/0108446 A1 | 1-8 |
| A | JP 2005-148180 A (Santec Corp.), 09 June 2005 (09.06.2005), paragraphs [0029] to [0034], [0048] to [0049]; fig. 1, 7 (Family: none) | 1-8 |
| A | US 6968103 B1 (General Dynamics Advanced Information Systems, Inc.), 22 November 2005 (22.11.2005), column 5, lines 19 to 39; fig. 10 (Family: none) | 1-8 |
| A | US 2005/0207713 A1 (Mazur Eric et al.), 22 September 2005 (22.09.2005), paragraph [0076]; fig. 12 & WO 2005/062347 A2 | 1-8 |

Form PCT/ISA/210 (continuation of second sheet) (July 2009)

**EP 3 199 994 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO63316008 A
- JP SHO61145509 A